# FASCICULE DE BREVET EUROPEEN

(11) **EP 3 675 440 B1**
(45) Date de publication et mention de la délivrance du brevet: **16.08.2023**
(21) Numéro de dépôt: 19219635.0
(22) Date de dépôt: 24.12.2019
(51) Int. Cl.: H04L 12/413, H04L 49/20, H04L 49/00, H04L 49/35, H04L 41/0806, H04L 43/022, H04L 43/062, H04L 43/12, H04L 49/25, H04L 69/22, H04L 12/40

(54) **COMMUTATEUR COMPORTANT UN PORT D'OBSERVABILITÉ ET SYSTÈME DE COMMUNICATION COMPORTANT UN TEL COMMUTATEUR**
UMSCHALTER MIT EINEM BEOBACHTBARKEITS-PORT UND KOMMUNIKATIONSSYSTEM, DAS EINEN SOLCHEN UMSCHALTER UMFASST
SWITCH COMPRISING AN OBSERVATION PORT AND COMMUNICATION SYSTEM COMPRISING SUCH A SWITCH

(30) Priorité: 26.12.2018 FR 1874161
(43) Date de publication de la demande: 01.07.2020
(73) Titulaire: Thales, 92400 Courbevoie (FR)
(72) Inventeur: FITTERER, Eric, 33700 MERIGNAC (FR); DUGAS, Alain, 33700 MERIGNAC (FR); FINAZ, Yves, 33700 MERIGNAC (FR); LALOIRE, Frédéric, 33700 MERIGNAC (FR); MONNIER, Stéphane, 33700 MERIGNAC (FR)
(74) Mandataire: Lavoix

(56) Documents cités:
- US-A1- 2009 303 883
- ANAÏS FINZI ET AL: "Mixed-Criticality on the AFDX Network: Challenges and Potential Solutions", PROCEEDINGS OF THE THE 9TH EUROPEAN CONGRESS EMBEDDED REAL TIME SOFTWARE AND SYSTEMS (ERTS 2018), 31 janvier 2018 (2018-01-31), pages 1-9, XP055630254,
- NIKKI CRANLEY: "The Implications for Network Switch Design in a Networked FTI Data Acquisition System", INTERNATIONAL TELEMETRY CONFERENCE PROCEEDINGS, 31 octobre 2011 (2011-10-31), XP055629864,

## Description

La présente invention concerne un commutateur comportant un port d'observabilité.

La présente invention concerne également un système de communication comportant un tel commutateur.

On connait de US 2009/303883 un commutateur transmettant des trames par un protocole de type Ethernet.

L'invention est applicable pour mettre en oeuvre un réseau avionique comme par exemple un réseau avionique conforme à la norme ARINC 664.

De manière connue en soi, la norme ARINC 664 est basée sur le standard Ethernet et permet d'adapter l'utilisation de ce standard au contexte avionique et notamment, aux contraintes avioniques.

La norme ARINC 664 est composée de plusieurs parties, chaque partie étant utilisable en fonction de contraintes imposées aux données transitant via le réseau avionique mis en oeuvre selon cette norme.

Parmi ces parties, on connait notamment la partie référencée par « P7 » et dénotée généralement par « ARINC 664 P7 » ou « ARINC 664 Part 7 » ou encore « AFDX ^{®} ».

Cette partie P7 est utilisable pour transmettre des données avioniques entre différents systèmes avioniques mettant en oeuvre des fonctions essentielles de l'avion et présente ainsi le plus grand nombre de contraintes.

Ainsi, un réseau avionique mis en oeuvre selon la partie P7 présente un réseau ségrégué, redondant et déterministe. Le déterminisme de ce réseau signifie en particulier que chaque trame émise atteint sa destination en un temps maximal connu.

Dans certains réseaux avioniques, il est également possible d'utiliser le protocole Ethernet (au sens de la norme IEEE 802.3-2000 et versions ultérieures) combiné avec un certain nombre de restrictions additionnelles imposées par la nature du réseau correspondant.

En comparaison avec la partie P7 de la norme ARINC 664, le protocole Ethernet avec des restrictions présente moins de contraintes et est ainsi utilisable pour mettre en oeuvre des réseaux avioniques transmettant des données moins sensibles et/ou moins critiques.

Ces données présentent généralement des données de maintenance, de téléchargement et des fonctions de service pour l'équipage relatives à différents systèmes avioniques. Ainsi, en cas de perte de ces données, elles peuvent être retransmises de nouveau sans créer de risque considérable pour la sécurité de l'avion.

Les restrictions additionnelles imposées sur le protocole Ethernet peuvent notamment concerner la manière de routage des trames. Ainsi, par exemple, ce routage peut être prédéterminé au sein de chaque commutateur du réseau, en fonction de l'identifiant de la trame.

Cela est par exemple le cas de la partie référencée par « P3 » de la norme ARINC 664 qui est basée également sur le protocole Ethernet mais qui présente moins de contraintes en comparaison avec la partie P7 et recommande cependant un usage de réseau configuré statiquement pour un mode opérationnel sur l'avion.

Pour assurer le bon fonctionnement d'un réseau avionique, il est connu dans l'état de la technique d'implémenter dans des commutateurs formant un tel réseau une fonction d'observabilité.

En particulier, cette fonction d'observabilité permet d'analyser le trafic des trames transitant le commutateur correspondant afin de déterminer d'éventuels problèmes liés à la transmission des trames. Elle est notamment applicable au stade de conception du réseau mais également lors de son fonctionnement normal.

L'observation est généralement mise en oeuvre via un port dédié du commutateur et peut être implémentée à plusieurs niveaux.

Ainsi, par exemple, pour un réseau de type ARINC 664 P7, l'observabilité peut être implémentée pour un ou plusieurs flux de données, pour un ou plusieurs ports, ou pour tout le trafic transitant dans le commutateur correspondant.

Dans le premier cas, l'observabilité est appliquée à toutes les trames d'un même flux devant être observé.

Dans le deuxième cas, l'observabilité est appliquée à toutes les trames transitant via le port devant être observée.

Dans le dernier cas, l'observabilité est appliquée à toutes les trames transitant via le commutateur correspondant.

Dans l'ensemble de ces cas, les trames à observer sont transmises vers le port dédié à l'observabilité et sont analysées ensuite par un équipement spécifique connecté à ce port.

En outre, compte tenu des contraintes imposées aux réseaux avioniques, la fonction d'observabilité est imposée au commutateur correspondant de manière statique et ne peut être modifiée au cours de son fonctionnement.

Ainsi, par exemple, lorsqu'un commutateur est configuré pour mettre en oeuvre une fonction d'observabilité au niveau par exemple d'un ou de plusieurs flux, chaque trame de ce(s) flux sera systématiquement redirigée vers le port d'observabilité.

On conçoit alors que cela pose un certain nombre de difficultés.

Tout d'abord, une telle fonction d'observabilité peut engendrer un trafic important vers le port d'observabilité ce qui peut le saturer. En outre, il serait intéressant parfois d'observer des flux et/ou des ports différents et de modifier donc de manière dynamique des flux et/ou des ports devant être observés.

La présente invention a pour but de proposer un commutateur et un système de communication pouvant mettre en oeuvre la fonction d'observabilité de manière dynamique. Autrement dit, l'invention permet de modifier la fonction d'observabilité sans qu'une reconfiguration du système soit nécessaire.

À cet effet, l'invention a pour objet un commutateur selon la revendication 1.

Suivant d'autres aspects avantageux de l'invention, le commutateur comprend une ou plusieurs des caractéristiques des revendications 2 à 8.

L'invention a également pour objet un système de communication avionique selon la revendication 9.

Suivant d'autres aspects avantageux de l'invention, le système comprend une ou plusieurs des caractéristiques des revendications 10 et 11.

Ces caractéristiques et avantages de l'invention apparaitront à la lecture de la description qui va suivre, donnée uniquement à titre d'exemple non limitatif, et faite en référence aux dessins annexés, sur lesquels :
[Fig 1] la figure 1 est une vue schématique d'un système de communication selon l'invention, le système de communication comportant au moins un commutateur selon l'invention ; et
[Fig 2] la figure 2 est une vue schématique détaillée du commutateur de la figure 1.

Dans tout ce qui suit, toute mention d'une norme, notamment d'une norme informatique, fait référence à des principes généraux de cette norme qui sont bien connus de l'homme du métier et qui sont indépendants de différentes versions de cette norme, sauf mention explicite.

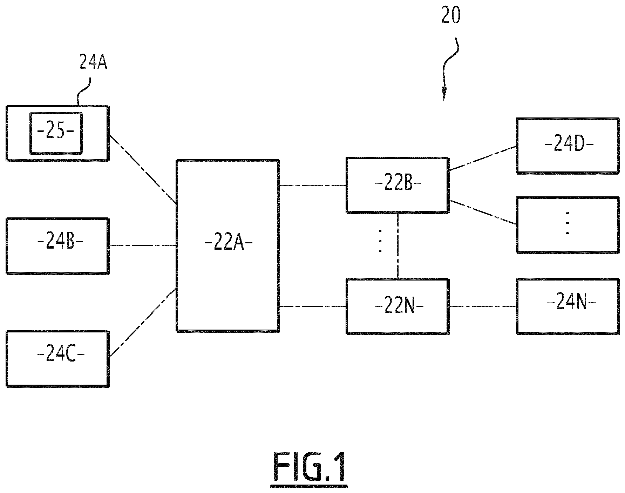

Le système de communication 20 de la figure 1 est embarqué dans un aéronef tel qu'un avion.

Ce système de communication 20 met en oeuvre au moins un réseau avionique.

Selon un exemple particulier de réalisation de l'invention décrit par la suite, ce réseau avionique permet de transmettre des données sensibles entre différents systèmes avioniques. Par donnée sensible, on comprend notamment toute donnée dont la perte ou un délai en transmission peut avoir une influence sur la sécurité de l'aéronef.

En particulier, ce réseau avionique permet de transmettre des trames de données conformément à un protocole de transmission par exemple de type Ethernet (au sens de la norme IEEE 802.3-2000 et versions ultérieures) à routage prédéterminé.

Dans tout ce qui suit, par routage prédéterminé, on entend un routage selon lequel chaque trame est cheminée dans le réseau selon des règles prédéterminées.

Ces règles prédéterminées sont notamment mémorisées dans une table de configuration de chaque commutateur mettant en oeuvre le réseau avionique et définissent le cheminement de chaque trame au sein de ce commutateur.

Ainsi, par exemple, cela est le cas lorsque la table de configuration de chaque commutateur définit pour chaque trame un port d'entrée et un ou plusieurs ports de sortie, ou lorsque la table de configuration de chaque commutateur définit pour chaque trame un ou plusieurs ports de sortie.

Selon un premier mode de réalisation de l'invention, ledit protocole de transmission est de type ARINC 664 P7 ou présente tout autre protocole connu de type Ethernet à routage prédéterminé tel que ARINC 664 P3.

Ainsi, comme cela est connu en soi, dans le cas où le protocole de transmission est de type ARINC 664 P7, chaque trame conforme à ce protocole comprend un entête comportant notamment un champ dit « MAC DEST ». Ce champ « MAC DEST » s'étend sur 6 octets.

Par ailleurs, comme cela est également connu en soi, deux octets du champ « MAC DEST » correspondent à une valeur VL appelée « lien virtuel » (ou « Virtual Link » en anglais) et définissant le cheminement de la trame. Les trames comportant une même valeur VL forment un même flux.

La valeur VL est mémorisée dans la table de configuration de chaque commutateur par lequel le flux correspondant à cette valeur VL transite et permet ainsi de cheminer chaque trame au sein de ce commutateur.

Au sens de la présente invention, la valeur VL de chaque trame est appelée identifiant de la trame correspondante.

Dans le cas où le protocole de transmission est de type ARINC 664 P3 ou de tout autre type Ethernet à routage prédéterminé, chaque trame conforme à ce protocole comprend également un entête comportant des bits réservés par la norme IEEE 802.3.

Selon l'invention, dans ce cas, l'entête de chaque trame définit une valeur Flow_ID appelée « identifiant de flux » (ou « Flow ID » en anglais). Cette valeur Flow_ID est définie hors les bits réservés par la norme IEEE 802.3 avec un usage local Ethernet.

Dans ce cas, les trames comportant une même valeur Flow_ID forment un même flux.

Cette valeur Flow_ID est mémorisée dans la table de configuration de chaque commutateur par lequel le flux correspondant à cette valeur Flow_ID transite. Cela permet à ce commutateur d'identifier chaque trame et de cheminer cette trame de façon prédéterminée, conformément à sa table de configuration.

Au sens de la présente invention, la valeur Flow_ID de chaque trame est appelée identifiant de la trame correspondante.

Par ailleurs, selon l'invention, chaque trame conforme au protocole de type ARINC 664 P7 ou de type ARINC 664 P3 ou de tout autre type Ethernet à routage prédéterminé, comporte un champ de paramétrage d'observabilité. Selon un exemple de réalisation, ce champ de paramétrage d'observabilité s'étend sur un bit et apte donc à prendre deux valeurs : « 0 » et « 1 ». La valeur « 0 » est appelée par la suite valeur prédéterminée qui signifie que la trame correspondante est observable par un commutateur, comme cela sera expliqué par la suite.

Selon l'invention, le champ de paramétrage d'observabilité présente une structure plus complexe et définit un niveau d'accès à cette trame pour l'observabilité. La signification de ce niveau d'accès sera également expliquée par la suite.

En référence à la figure 1, le système de communication 20 comprend une pluralité de commutateurs 22A,...,22N et une pluralité d'équipements 24A,...,24N.

Chaque équipement 24A,...,24N, connu également sous le terme anglais de « End System », est intégré dans un système avionique et assure la communication de ce système avec le réseau avionique.

Ainsi, en fonction du système avionique dans lequel il est intégré, chaque équipement 24A,...,24N peut être émetteur et/ou récepteur des trames conformes audit protocole de transmission.

Chaque équipement 24A,...,24N est raccordé à au moins l'un des commutateurs 22A,..., 22N via des moyens de transmission et via au moins un port de ce commutateur. Les moyens de transmission présentent par exemple un câble à paire torsadée ou tout autre type de câble permettant une transmission bidirectionnelle de données.

Parmi les équipements 24A,...,24N, au moins un équipement, par exemple l'équipement 24A, comprend un module d'observation 25 permettant de mettre en oeuvre une fonction d'observabilité d'au moins l'un des commutateurs 22A,..., 22N, par exemple du commutateur 24A, comme cela sera expliqué par la suite.

L'ensemble des commutateurs 22A,...,22N présentent par exemple une structure sensiblement identique.

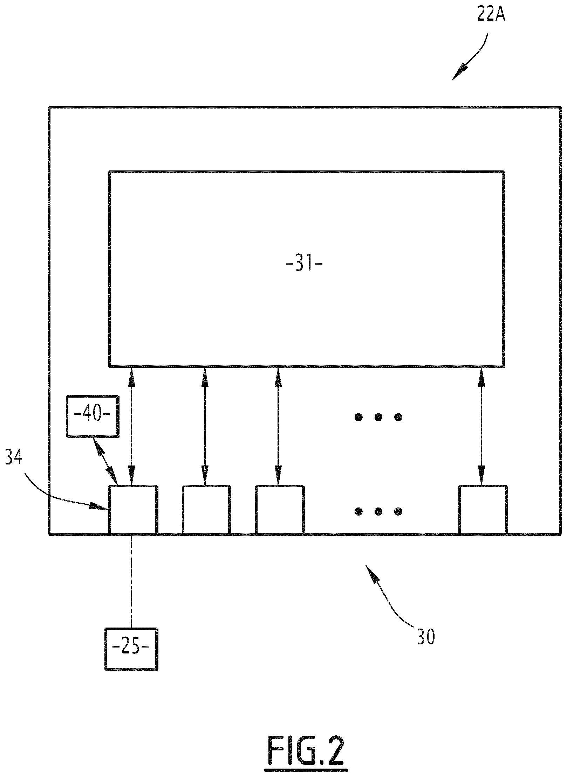

Ainsi, par la suite, seule la structure du commutateur 22A sera expliquée en détail en référence à la figure 2.

Comme cela est visible sur cette figure 2, le commutateur 22A comprend une pluralité de ports 30 et une composante de cheminement 31.

Chaque port 30 est un port d'entrée et/ou de sortie.

En outre, au sein du commutateur 22A, chaque port 30 est associé à un identifiant unique.

La composante de cheminement 31 permet de cheminer chaque trame entre un port d'entrée vers un port de sortie conformément à la table de configuration du commutateur 24A correspondant. Cette table de configuration est par exemple intégrée dans la composante de cheminement 31.

Cette composante de cheminement 31 se présente par exemple sous la forme d'un circuit logique programmable de type FPGA (de l'anglais « Field-Programmable Gate Array ») ou ASIC (« Application Specific Integrated Circuit »).

Pour mettre en oeuvre la fonction d'observabilité, au moins l'un des ports de sortie du commutateur 22A est dédié à cette fonction d'observabilité.

Ce port est appelé par la suite port d'observabilité et est dénoté par la référence 34 sur la figure 2.

Ainsi, comme cela est visible sur cette figure 2, le port d'observabilité 34 est raccordé au module d'observation 25 et permet de transmettre à ce module 25 au moins certaines des trames cheminées par la composante de cheminement 31 vers ce port 34.

Selon l'invention, la composante de cheminement 31 est configurée pour cheminer vers le port d'observabilité 34 uniquement des trames satisfaisant à une première condition d'observabilité.

La conformité à cette première condition d'observabilité est déterminée en fonction du champ d'observabilité de la trame correspondante.

En particulier, lorsque le champ d'observabilité s'étend selon un seul bit, elle satisfait à la première condition d'observabilité lorsque ce champ est égal à la valeur prédéterminée. Cette valeur prédéterminée correspond à la valeur « 0 » dans l'exemple décrit.

Selon l'invention lorsque le champ d'observabilité présente une structure plus complexe et définit notamment un niveau d'accès, la conformité de la trame à la première condition est déterminée en fonction de ce niveau d'accès et d'un certain nombre de paramètres extérieurs relatifs par exemple au fonctionnement du système de communication 20 et/ou du module d'observation 25.

Ainsi, par exemple, ces paramètres peuvent être relatifs au mode de fonctionnement du système de communication 20 (mode normal, mode de conception ou mode de maintenance) et/ou l'identifiant de l'utilisateur du module d'observation 25.

Par exemple, un niveau d'accès élevé peut être associé à certaines trames ou flux transportant des données de sensibilité élevée. Ces trames peuvent par exemple être observables uniquement lorsque le système 20 est en mode maintenance et/ou uniquement par certain type d'utilisateurs.

Au contraire, pour les trames ou flux transportant des données moins sensibles, un niveau d'accès bas peut être associé. Ainsi, ces trames peuvent être observables pour l'ensemble des utilisateurs et/ou l'ensemble des modes de fonctionnement du système 20.

Selon l'invention, seules les trames satisfaisant en outre à une deuxième condition d'observabilité sont transmises du port d'observabilité 34 au module d'observation 25.

La conformité d'une trame à la deuxième condition d'observabilité est déterminée en fonction de l'identifiant et/ou d'un port d'entrée et/ou de sortie associé à cette trame.

Pour ce faire, selon un exemple de l'invention, le port d'observabilité 34 est configuré pour contrôler la conformité de chaque trame lui transmise par la composante de cheminement 31, à la deuxième condition d'observabilité.

Dans ce cas, le port d'observabilité 34 est associé à une table de configuration différente de la table de configuration de la composante de cheminement 31.

Cette table de configuration associée au port d'observabilité 34 définit par exemple une liste de flux observables et/ou une liste de ports d'entrée observables et/ou une liste de ports de sortie observables.

Pour configurer cette table de configuration, le commutateur 22A comprend en outre un module de configuration 40 du port d'observabilité 34.

Ainsi, ce module de configuration 40 permet par exemple à un utilisateur de modifier la table de configuration associée au port d'observabilité 34 via une interface adaptée.

En fonction de différents exemples de réalisation, une telle modification peut être faite lorsque le système 20 est en mode de conception ou en mode de maintenance, ou alors en mode de fonctionnement normal.

Par ailleurs, dans différentes variantes réalisation, la conformité des trames à la deuxième condition d'observabilité peut être contrôlée par des composantes et interfaces du commutateur 22A différentes du port d'observabilité 34.

Le fonctionnement du système de communication 20 sera désormais expliqué.

Lorsqu'il est nécessaire d'assurer la fonction d'observabilité par exemple du commutateur 22A, au moins un équipement émetteur 24A,...,24N émet au moins certaines trames avec le champ de paramétrage d'observabilité satisfaisant à la première condition d'observabilité. Par exemple, lorsque le champ d'observabilité s'étend sur un seul bit, l'équipement correspondant associe la valeur « 0 » à ce champ.

À la réception d'une telle trame, la composante de cheminement 31 du commutateur 22A détermine qu'il s'agit d'une trame devant être observée et la transmet vers le port d'observabilité 34.

En variante, la composante de cheminement 31 transmet vers le port d'observabilité 34 une copie de cette trame tout en transmettant la trame d'origine vers un ou plusieurs autres ports de sortie déterminé(s) par son identifiant.

Puis, le port d'observabilité 34 transmet cette trame vers le module d'observation 25 si elle satisfait en outre à la deuxième condition d'observabilité. Pour ce faire, le port d'observabilité 34 détermine l'identifiant de la trame ou/et l'identifiant de son port d'entrée et/ou le ou les identifiants de ses ports de sortie. Puis, le port d'observabilité 34 compare cet ou ces identifiants avec la table de configuration associée.

Puis, le module d'observation 25 effectue une analyse de chaque trame transmise conformément à des méthodes connues en soi.

Cette observabilité du commutateur 22A peut être donc mise en oeuvre de manière dynamique, à tout stade du fonctionnement du système 20. Ainsi, par exemple, elle peut être mise en oeuvre lors de la conception, la maintenance ou le fonctionnement normal de ce système.

Il est clair par ailleurs que l'observabilité dynamique selon l'invention est mise en oeuvre tout en gardant inchangée la table de configuration associée à la composante de cheminement 31. Cela n'altère alors pas le déterminisme du réseau qui reste conforme aux contraintes avioniques.

On conçoit alors que cela permet de résoudre les problèmes de l'état de la technique et de donc piloter l'observabilité dans un réseau avionique de manière dynamique, à tout stade de fonctionnement de ce réseau, et sans impact sur son déterminisme.

Le système de communication avionique selon un deuxième mode de réalisation de l'invention sera désormais expliqué.

Ce système de communication est sensiblement analogue à celui selon le premier mode de réalisation et comprend en particulier les mêmes composantes. Ces composantes seront donc dénotées par les mêmes références numériques que dans le cas précédent.

À la différence du premier mode de réalisation, le protocole de transmission utilisé dans le système de communication 20 selon le deuxième mode de réalisation présente un protocole mixte composé d'un premier protocole et d'un deuxième protocole.

Le premier protocole est de type ARINC 664 P7.

Le deuxième protocole est de type Ethernet à routage prédéterminé. Ce deuxième protocole est par exemple de type ARINC 664 P3.

Ainsi, pour mettre en oeuvre la transmission des trames selon un tel protocole mixte, la première composante de cheminement 31 du chaque commutateur 22A,...,22N est modifiée par rapport au cas précédent.

En particulier, ces éléments sont modifiés pour différencier chaque trame entrante selon son protocole et pour traiter cette trame conformément à celui-ci.

De plus, chaque trame conforme au premier protocole, c'est-à-dire au protocole de type ARINC 664 P7, est traitée en priorité par rapport à chaque trame conforme au deuxième protocole.

La différenciation des trames selon le premier protocole et selon le deuxième protocole s'effectue selon l'entête de ces trames.

Ainsi, par exemple, les premiers octets de l'entête de chaque trame conforme au deuxième protocole est défini par toute valeur différente de la valeur « 0000 0011 0000 0000 0000 0000 0000 0000 ». Il est en effet connu que cette valeur est réservée pour chaque trame conforme au protocole de type ARINC 664 P7 dans le champ « MAC DEST ».

En outre, comme dans le cas précédent, chaque trame conforme à l'un de ces protocoles définit un champ de paramétrage d'observabilité ce qui permet d'indiquer à la composante 31 du commutateur 22A si cette trame doit être observée ou non.

L'invention selon le deuxième mode de réalisation permet donc de mettre en oeuvre une fonction d'observabilité dans des systèmes de communication dits mixtes. Bien entendu, il est possible de mettre en oeuvre cette fonction de mixabilité dans tout autre type de systèmes mixtes.

## Revendications

1. Commutateur (22A) pour un système de communication avionique (20) comprenant une pluralité d'équipements (24A, ..., 24N) transmettant des données numériques se présentant sous la forme des trames conformes à un protocole de transmission de données de type Ethernet à routage prédéterminé, chaque trame comprenant un identifiant et un champ de paramétrage d'observabilité ;
le commutateur (22A) comportant :
- une pluralité de ports d'entrée (30), chaque port d'entrée étant apte à recevoir des trames issues de l'un des équipements (24A,...,24N) ou d'un autre commutateur (22B,...,22N) ;
- une pluralité de ports de sortie (30), chaque port de sortie étant apte à transmettre des trames vers l'un des équipements (24A,...,24N) ou un autre commutateur (22B,...,22N), au moins un port de sortie, dit port d'observabilité (34), étant connecté à un module d'observation (25) disposé dans l'un des équipements (24A, ..., 24N) et apte à analyser le trafic des trames transitant via le commutateur (22A) ;
- une composante de cheminement (31) configurée pour cheminer chaque trame conformément audit protocole de transmission entre au moins un port d'entrée et un ou plusieurs ports de sortie ;
chaque port d'entrée et de sortie étant associé à un identifiant ;
le commutateur (22A) étant configuré pour transmettre vers le module d'observation (25) via le port d'observabilité (34) uniquement des trames conformes à une première condition d'observabilité et à une deuxième condition d'observabilité ;
la conformité d'une trame à la première condition d'observabilité étant déterminée en fonction du champ de paramétrage d'observabilité de cette trame et la conformité à la deuxième condition d'observabilité étant déterminée en fonction de l'identifiant de cette trame et/ou d'un port d'entrée et/ou de l'un des ports de sortie associé à cette trame,
dans lequel le champ de paramétrage d'observabilité de chaque trame définit un niveau d'accès à l'observabilité de cette trame, la conformité à la première condition d'observabilité étant déterminée en fonction de ce niveau d'accès et d'un ou de plusieurs paramètres extérieurs, de préférence relatifs au fonctionnement du système de communication avionique (20) et/ou au module d'observation (25).

2. Commutateur (22A) selon la revendication 1, dans lequel la composante de cheminement (31) est configurée pour contrôler la conformité de chaque trame à la première condition d'observabilité et lorsque cette trame est conforme à cette condition, pour la transmettre vers le port d'observabilité.

3. Commutateur (22A) selon la revendication 1 ou 2, dans lequel le port d'observabilité (34) est configuré pour contrôler la conformité de chaque trame à la deuxième condition d'observabilité et lorsque cette trame est conforme à cette condition, pour la transmettre vers le module d'observation (25).

4. Commutateur (22A) selon la revendication 3, dans lequel le port d'observabilité (34) est associé une table de configuration définissant pour chaque trame sa conformité à la deuxième condition d'observabilité en fonction de l'identifiant de cette trame et/ou de l'identifiant du port d'entrée ayant reçu cette trame et/ou de l'identifiant d'un ou de plusieurs ports de sortie auxquels cette trame est destinée.

5. Commutateur (22A) selon la revendication 4, comprenant en outre un module de configuration (40) permettant de configurer la table de configuration du port d'observabilité (34).

6. Commutateur (22A) selon l'une quelconque des revendications précédentes, dans lequel ledit protocole de transmission est de type ARINC 664 P7.

7. Commutateur (22A) selon l'une quelconque des revendications 1 à 5, dans ledit protocole est un protocole mixte composé d'un protocole de type ARINC 664 P7 et d'un protocole de type Ethernet à routage prédéterminé.

8. Commutateur (22A) selon la revendication 7, dans lequel la composante de cheminement (31) est apte à différencier les trames de données conformes au protocole de type ARINC 664 P7 et les trames de données conformes au protocole de type Ethernet à routage prédéterminé, et à traiter chaque trame de données conformément au protocole lui correspondant, chaque trame de données conforme au protocole de type ARINC 664 P7 étant traitée en priorité par rapport à chaque trame de données conforme au protocole de type Ethernet à routage prédéterminé.

9. Système de communication avionique (20) comportant :
- une pluralité de commutateurs (22A,...,22N) raccordés entre eux pour former un réseau informatique ;
- une pluralité d'équipements (24A,...,24N), chaque équipement (24A,...,24N) étant émetteur et/ou récepteur des données numériques et étant raccordé à au moins un commutateur (22A,...,22N) ;
les données numériques se présentant sous la forme des trames conformes à un protocole de transmission de données de type Ethernet à routage prédéterminé, chaque trame comprenant un identifiant et un champ de paramétrage d'observabilité ;
le système (20) étant **caractérisé en ce qu'**au moins l'un des commutateurs (22A,...,22N) est conforme à l'une quelconque des revendications 1 à 8.

10. Système (20) selon la revendication 9, dans lequel l'un des équipements (24A,...,24N) comprend ledit module d'observation (25).

11. Système (20) selon la revendication 9 ou 10, dans lequel au moins l'un des équipements (24A,...,24N) est configuré pour attribuer au champ de paramétrage d'observabilité d'une trame une valeur prédéterminée pour que la trame soit conforme à la première condition d'observabilité.

## Patentansprüche

1. Schalter (22A) für ein Avionik-Kommunikationssystem (20), umfassend eine Vielzahl von Ausrüstungen (24A, ..., 24N), die digitale Daten in Form von Datenblöcken gemäß einem Datenübertragungsprotokoll vom Typ Ethernet mit vorbestimmtem Routing übertragen, jeder Datenblock umfassend eine Kennung und ein Beobachtbarkeits-Parameterierfeld;
der Schalter (22A) umfassend:
- eine Vielzahl von Eingangsanschlüssen (30), wobei jeder Eingangsanschluss geeignet ist, um Datenblöcke zu empfangen, die von einem der Ausrüstungen (24A,...,24N) oder einem anderen Schalter (22B,...,22N) stammen;
- eine Vielzahl von Ausgangsanschlüssen (30), wobei jeder Ausgangsanschluss in der Lage ist, Datenblöcke an eine der Ausrüstungen (24A, ..., 24N) oder einen anderen Schalter (22B,...,22N) zu übertragen, wobei mindestens ein Ausgangsanschluss, bezeichnet als Beobachtbarkeitsanschluss (34), mit einem Beobachtungsmodul (25) verbunden ist, das in einem der Ausrüstungen (24A, ..., 24N) angeordnet und geeignet ist, den Verkehr von Datenblöcken zu analysieren, die über den Schalter (22A) geleitet werden;
- eine Leitwegkomponente (31), die konfiguriert ist, um jeden Datenblock gemäß dem Übertragungsprotokoll zwischen mindestens einem Eingangsanschluss und einem oder mehreren Ausgangsanschlüssen zu leiten;
wobei mit jedem Eingangs- und Ausgangsanschluss eine Kennung assoziiert ist;
wobei der Schalter (22A) konfiguriert ist, um über den Beobachtbarkeitsanschluss (34) nur Datenblöcke an das Beobachtungsmodul (25) zu übertragen, die mit einer ersten Beobachtbarkeitsbedingung und einer zweiten Beobachtbarkeitsbedingung übereinstimmen;
wobei die Übereinstimmung eines Datenblocks mit der ersten Beobachtbarkeitsbedingung abhängig von dem Beobachtbarkeits-Parameterierfeld dieses Datenblocks bestimmt wird und die Übereinstimmung mit der zweiten Beobachtbarkeitsbedingung abhängig von der Kennung dieses Datenblocks und/oder eines Eingangsanschlusses und/oder eines der Ausgangsanschlüsse, die mit diesem Datenblock assoziiert sind, bestimmt wird,
wobei das Beobachtbarkeits-Parameterierfeld von jedem Datenblocks eine Zugriffsebene auf die Beobachtbarkeit dieses Datenblocks definiert, wobei die Übereinstimmung mit der ersten Beobachtbarkeitsbedingung von einer anderen Person oder einem anderen Faktor abhängig von dieser Zugriffsebene und einem oder mehreren externen Parametern, vorzugsweise in Bezug auf den Betrieb des Avionik-Kommunikationssystems (20) und/oder des Beobachtungsmoduls (25), bestimmt wird.

2. Schalter (22A) nach Anspruch 1, wobei die Leitwegkomponente (31) konfiguriert ist, um die Übereinstimmung von jedem Datenblock mit der ersten Beobachtbarkeitsbedingung zu kontrollieren und, wenn dieser Datenblock mit dieser Bedingung übereinstimmt, ihn an den Beobachtbarkeitsanschluss zu übertragen.

3. Schalter (22A) nach Anspruch 1 oder 2, wobei der Beobachtbarkeitsanschluss (34) konfiguriert ist, um jeden Datenblock auf Übereinstimmung mit der zweiten Beobachtbarkeitsbedingung zu kontrollieren und, wenn dieser Datenblock mit dieser Bedingung übereinstimmt, um ihn an das Beobachtungsmodul (25) zu übertragen.

4. Schalter (22A) nach Anspruch 3, wobei mit dem Beobachtbarkeitsanschluss (34) eine Konfigurationstabelle assoziiert ist, die für jeden Datenblock seine Übereinstimmung mit der zweiten Beobachtbarkeitsbedingung abhängig von der Kennung dieses Datenblocks und/oder der Kennung des Eingangsanschlusses, der diesen Datenblock empfangen hat, und/oder der Kennung eines oder mehrerer Ausgangsanschlüssen, für die dieser Datenblock bestimmt ist, definiert.

5. Schalter (22A) nach Anspruch 4, ferner umfassend ein Konfigurationsmodul (40), das es ermöglicht, die Konfigurationstabelle des Beobachtbarkeitsanschlusses (34) zu konfigurieren.

6. Schalter (22A) nach einem der vorherigen Ansprüche, wobei das Übertragungsprotokoll vom Typ ARINC 664 P7 ist.

7. Schalter (22A) nach einem der Ansprüche 1 bis 5, wobei das Protokoll ein gemischtes Protokoll ist, das aus einem Protokoll vom Typ ARINC 664 P7 und einem Protokoll vom Typ Ethernet mit vorbestimmtem Routing besteht;

8. Schalter (22A) nach Anspruch 7, wobei die Leitwegkomponente (31) in der Lage ist, zwischen Datenframes, die dem Protokoll vom Typ ARINC 664 P7 entsprechen, und Datenframes, die dem Protokoll vom Typ Ethernet mit vorbestimmtem Routing entsprechen, zu unterscheiden und jedes Datenframe gemäß dem jeweiligen Protokoll zu verarbeiten, wobei jedes Datenframe gemäß dem Protokoll vom Typ ARINC 664 P7 vorrangig vor jedem Datenframe gemäß dem Protokoll vom Typ Ethernet mit vorbestimmtem Routing verarbeitet wird.

9. Avionik-Kommunikationssystem (20), umfassend:
- eine Vielzahl von Schaltern (22A,...,22N), die untereinander verbunden sind, um ein Computernetzwerk zu bilden;
- eine Vielzahl von Geräten (24A,...,24N), wobei jedes Gerät (24A,...,24N) ein Sender und/oder Empfänger von digitalen Daten ist und mit mindestens einem Schalter (22A,...,22N) verbunden ist;
wobei die digitalen Daten in Form von Datenblöcken gemäß einem Datenübertragungsprotokoll vom Typ Ethernet mit vorbestimmtem Routing sind, jeder Datenblock umfassend eine Kennung und ein Beobachtbarkeits-Parameterierfeld;
wobei das System (20) **dadurch gekennzeichnet, dass** mindestens einer der Schalter (22A,...,22N) gemäß einem der Ansprüche 1 bis 8 ist.

10. System (20) nach Anspruch 9, wobei eine der Ausrüstungen (24A,... ,24N) das Beobachtungsmodul (25) umfasst.

11. System (20) nach Anspruch 9 oder 10, wobei mindestens eine der Ausrüstungen (24A, ..., 24N) so konfiguriert ist, um dem Beobachtbarkeits-Parameterierfeld eines Datenblocks einen vorbestimmten Wert zuzuweisen, damit der Datenblock die erste Beobachtbarkeitsbedingung erfüllt.

## Claims

1. A switch (22A) for an avionics communication system (20) comprising a plurality of end systems (24A, ..., 24N) transmitting digital data in the form of frames according to a data transmission protocol of the Ethernet type with predetermined routing, each frame comprising an identifier and an observation configuration field;
the switch (22A) including:
- a plurality of input ports (30), each input port being able to receive frames coming from one of the end systems (24A,...,24N) or another switch (22B,...,22N);
- a plurality of output ports (30), each output port being able to transmit frames to one of the end systems (24A,...,24N) or another switch (22B,...,22N), at least one output port, called observation port (34), being connected to an observation module (25) arranged in the one of the end systems (24A, ..., 24N) and able to analyze the traffic of the frames passing through via the switch (22A);
- a conveying component (31) configured to convey each frame according to said transmission protocol between at least one input port and one or several output ports;
each input and output port being associated with an identifier;
the switch (22A) being configured to transmit, to the observation module (25) via the observation port (34), only frames according to a first observation condition and a second observation condition;
the compliance of a frame with the first observation condition being determined as a function of the observation configuration field of this frame and the compliance with the second observation condition being determined as a function of the identifier of this frame and/or of an input and/or one of the output ports associated with this frame, wherein the observation configuration field of each frame defines an observation access level of this frame, the compliance with the second observation condition being determined as a function of this access level and one or several outside parameters, preferably relative to the operation of the avionics communication system (20) and/or the observation module (25).

2. The switch (22A) according to claim 1, wherein the conveying component (31) is configured to check the compliance of each frame with the first observation condition and when this frame complies with this condition, to transmit it to the observation port.

3. The switch (22A) according to claim 1 or 2, wherein the observation port (34) is configured to check the compliance of each frame with the second observation condition and when this frame complies with this condition, to transmit it to the observation module (25).

4. The switch (22A) according to claim 3, wherein the observation port (34) is associated with a configuration table defining, for each frame, its compliance with the second observation condition as a function of the identifier of this frame and/or the identifier of the input port having received this frame and/or the identifier of one or several output ports for which this frame is intended.

5. The switch (22A) according to claim 4, further comprising a configuration module (40) making it possible to configure the configuration table of the observation port (34).

6. The switch (22A) according to any one of the preceding claims, wherein said transmission protocol is of type ARINC 664 P7.

7. The switch (22A) according to any one of claims 1 to 5, wherein said protocol is a mixed protocol made up of a protocol of type ARINC 664 P7 and a protocol of the Ethernet type with predetermined routing.

8. The switch (22A) according to claim 7, wherein the conveying component (31) is able to differentiate between the data frames according to the protocol of type ARINC 664 P7 and the data frames according to the protocol of the Ethernet type with predetermined routing, and to process each data frame according to the protocol corresponding to it, each data frame according to the protocol of the ARINC 664 P7 type being processed as a priority relative to each data frame according to the protocol of the Ethernet type with predetermined routing.

9. The avionic communication system (20) including:
- a plurality of switches (22A,...,22N) connected to one another to form a computer network;
- a plurality of end systems (24A,...,24N), and each end system (24A,...,24N) sending and/or receiving digital data and being connected to at least one switch (22A,...,22N);
the digital data taking the form of frames according to a data transmission protocol of the Ethernet type with predetermined routing, each frame comprising an identifier and an observation configuration field;
the system (20) being **characterized in that** at least one of the switches (22A,...,22N) is according to any one of claims 1 to 10.

10. The system (20) according to claim 9, wherein one of the end systems (24A,...,24N) comprises said observation module (25).

11. The system (20) according to claim 9 or 10, wherein at least one of the end systems (24A,...,24N) is configured to assign the observation configuration field of a frame a predetermined value so that the frame is according to the first observation condition.
